# EUROPÄISCHE PATENTANMELDUNG

(11) **EP 4 596 324 A1**
(43) Veröffentlichungstag der Anmeldung: **06.08.2025**
(21) Anmeldenummer: 24217649.3
(22) Anmeldetag: 05.12.2024
(51) Int. Cl.: B60Q 3/60

(54) **LEUCHTVORRICHTUNG FÜR EINEN INNENRAUM EINES FAHRZEUGS**

(30) Priorität: 30.01.2024 DE 102024200824
(71) Anmelder: Stellantis Auto SAS, 78300 Poissy (FR)
(72) Erfinder: BOECHER, Nicolas, 65428 Rüsselsheim am Main (DE); FROMMANN, Markus, 65428 Rüsselsheim am Main (DE)
(74) Vertreter: ESIP

(57) **Zusammenfassung**

Eine Leuchtvorrichtung (1) für einen Innenraum eines Fahrzeugs wird bereitgestellt. Die Leuchtvorrichtung umfasst - ein Gehäuse (2), einen Leuchtkörper (6) zum Erzeugen einer Leuchtstruktur innerhalb des Gehäuses (2), und wenigstens eine Lichtquelle (3) zum Ausleuchten des Leuchtkörpers (6), und einen der wenigstens einen Lichtquelle (3) nachgeschalteten optischen Booster (20), wobei der optische Booster (20) dazu ausgebildet ist, das von der wenigstens einen Lichtquelle (3) erzeugte Licht gezielt zu dem Leuchtkörper (6) zu bringen. Ferner wird ein Fahrzeug bereitgestellt. Das Fahrzeug weist wenigstens einen Innenraum mit wenigstens einer Leuchtvorrichtung (1) zur lichttechnischen Gestaltung des Innenraums des Fahrzeugs auf.

## Beschreibung

Die vorliegende Offenbarung betrifft im Allgemeinen eine Leuchtvorrichtung. Im Speziellen betrifft die vorliegende Offenbarung eine Leuchtvorrichtung für einen Innenraum eines Fahrzeugs sowie ein die Leuchtvorrichtung aufweisendes Fahrzeug.

Es sind Leuchtvorrichtungen für Fahrzeuginnenräume bekannt. Es sind ferner Leuchtvorrichtung mit LEDs (Licht emittierende Dioden) als Lichtquellen bekannt. Die Leuchtvorrichtungen können zum Beleuchten von Fahrzeuginnenräumen und/oder als Dekorationsleuchten bzw. Akzentleuchten ausgebildet sein. Es sind insbesondere Leuchtvorrichtungen zum Erzeugen von leuchtenden Strukturen bekannt. Solche Leuchtvorrichtungen weisen in der Regel einen komplexen Aufbau auf und benötigen verhältnismäßig großen Bauraum. Zudem ist die Erzeugung von leuchtenden Strukturen bzw. Leuchtstrukturen mit einem hohen Verlust an Lichtausbeute verbunden.

Eine Aufgabe der Ausführungsformen der vorliegenden Offenbarung ist es, eine visuell ansprechende Leuchtvorrichtung mit geringem Bauraum und hoher Lichtausbeute für einen Innenraum eines Fahrzeugs bereitzustellen.

Zur Lösung dieser Aufgabe wird nach einem ersten Aspekt eine Leuchtvorrichtung für einen Innenraum eines Fahrzeugs bereitgestellt. Die Leuchtvorrichtung umfasst ein Gehäuse, einen Leuchtkörper zum Erzeugen einer Leuchtstruktur innerhalb des Gehäuses sowie wenigstens eine Lichtquelle zum Ausleuchten des Leuchtkörpers. Insbesondere kann die Lichtquelle ein oder mehrere Leuchtmittel umfassen und dazu ausgebildet sein, durch Anleuchten des Leuchtkörpers den Leuchtkörper zum Leuchten zu bringen. Die Leuchtvorrichtung umfasst ferner einen der wenigstens einen Lichtquelle nachgeschalteten optischen Booster, wobei der optische Booster dazu ausgebildet ist, das von der wenigstens einen Lichtquelle erzeugte Licht gezielt zu dem Leuchtkörper zu bringen. Insbesondere kann der optische Booster dazu ausgebildet sein, den Leuchtkörper, insbesondere einen oder mehrere Bereiche des Leuchtkörpers, gezielt auszuleuchten. Aufgrund des gezielten Ausleuchtens des Leuchtkörpers kann die Leuchthelligkeit der Leuchtstruktur deutlich erhöht werden, so dass eine Zielhelligkeit mit weniger elektrischer Leistung bzw. mit weniger LEDs erzielt werden kann.

Der optische Booster kann wenigstens einen Lichtleitkanal zum Leiten des von der wenigstens einen Lichtquelle erzeugten Lichts zu dem Leuchtkörper umfassen. Mittels der Lichtkanäle kann insbesondere das von der wenigstens einen Lichtquelle erzeugte Licht so kanalisiert werden, dass es im Wesentlichen ohne bzw. mit minimalem Lichtverlust zu dem Leuchtkörper gelangt.

Der optische Booster kann insbesondere eine erste Spiegelanordnung mit im Wesentlichen zueinander gerichteten Spiegeloberflächen umfassen. Die im Wesentlichen zueinander gerichteten Spiegeloberflächen können insbesondere einen Lichtkanal in Form eines Hohlraums bilden, in dem das Licht auf besonders effiziente Weise, insbesondere durch Reflexionen bzw. Mehrfachreflexionen an den Spiegeloberflächen zu dem Leuchtkörper geführt werden kann. Insbesondere kann die Spiegelanordnung so ausgebildet sein, dass zwischen den beiden Spiegeln Hohlraum entsteht, der sich in axialer Richtung auf die definierte Größe des zu beleuchtenden Diffusorbereichs verjüngt, um das Licht möglichst verlustfrei zum Diffusor zu leiten. Insbesondere kann die Spiegelanordnung so ausgebildet sein, dass die Ausleuchtung des Diffusors bzw. des Leuchtkörpers im Wesentlichen auf bestimmte Bereiche des Leuchtkörpers beschränkt ist. Durch die Beschränkung der Ausleuchtung auf bestimmte Bereiche des Leuchtkörpers kann eine besonders stark ausgeprägte Leuchtstruktur erzeugt werden.

In einigen Ausführungsbeispielen umfasst die Leuchtvorrichtung eine zweite Spiegelanordnung, wobei die zweite Spiegelanordnung derart ausgebildet ist, dass die Leuchtstruktur an unterschiedlichen Tiefenebenen innerhalb des Gehäuses mehrfach erscheinen kann. Durch das Erscheinen der Leuchtstruktur an unterschiedlichen Tiefenebenen kann neben einem Volumeneffekt ein visueller Unendlichkeitseffekt bzw. Infinity Effect, insbesondere eine Illusion sich unendlich wiederholender Strukturen, entstehen.

Das Gehäuse kann eine im Wesentlichen axialsymmetrische Seitenwand und einen flächigen Gehäuseboden umfassen, wobei die wenigstens eine Lichtquelle im Wesentlichen planar auf einer Innenseite des flächigen Gehäusebodens angeordnet sein kann. Insbesondere kann die Lichtquelle eine an dem flächigen Gehäuseboden planar angeordnete Platine mit einer Anzahl von über die Fläche der Platine verteilten LEDs umfassen. Durch den planaren Aufbau der Lichtquelle auf dem Gehäuseboden kann der Aufbau der Leuchtvorrichtung insgesamt vereinfacht werden und die Gesamtabmessungen der Leuchtvorrichtung, insbesondere in radialer Richtung, können reduziert werden.

Der Leuchtkörper und die zweite Spiegelanordnung können der wenigstens einen Lichtquelle und dem optischen Booster in axialer Richtung nachgeschaltet und im Wesentlichen planparallel zu dem Gehäuseboden ausgebildet sein. Durch die planparallele Ausbildung der Komponenten der Leuchtvorrichtung kann insbesondere erzielt werden, dass sich die visuell wahrnehmbaren Strukturen in regelmäßigen Abständen wiederholen.

Die zweite Spiegelanordnung kann einen im Wesentlichen nichttransparenten bzw. lichtundurchlässigen Spiegel mit einer der wenigstens einen Lichtquelle abgewandte Spiegeloberfläche umfassen. Insbesondere kann die zweite Spiegelanordnung derart ausgebildet sein, dass das von dem Leuchtkörper abgestrahlte und innerhalb der Spiegelanordnung zurückreflektierte Licht von der der Lichtquelle abgewandten Spiegeloberfläche wieder nach vorne reflektiert wird. Die dabei auftretenden Mehrfachreflexionen können zur Verstärkung des visuellen Effekts der sich wiederholenden Strukturen führen.

Der nichttransparente Spiegel kann mit einer der wenigstens einen Lichtquelle zugewandten Seite an dem Leuchtkörper anliegen. Insbesondere kann der nichttransparente Spiegel so ausgebildet sein, dass wenigstens ein Teil des Leuchtkörpers durch den nichttransparenten Spiegel abgedeckt wird, wobei ein nichtabgedeckter Teil des Leuchtkörpers als strukturierter Leuchtkörper bzw. als Lichtstruktur erscheinen kann. Somit kann der nichttransparente Spiegel sowohl zur Erzeugung von Mehrfachreflexion in der Spiegelanordnung als auch zur Erzeugung der Leuchtstruktur verwendet werden.

Die Spiegelanordnung kann ferner wenigstens einen dem im Wesentlichen nichttransparenten Spiegel nachgeschalteten teildurchlässigen Spiegel umfassen. Der wenigstens eine teildurchlässige Spiegel kann insbesondere eine bestimmte Transparenz aufweisen. Insbesondere kann der teildurchlässige Spiegel so ausgebildet sein, dass ein bestimmter Teil des auf den teildurchlässigen Spiegel einfallenden Lichtes durchgelassen wird. Ein bestimmter Teil des einfallenden Lichts kann spiegelreflektiert auf den nichttransparenten Spiegel zur erneuten Reflexion zurückgeworfen werden. Somit kann eine Art Light-Recycling wiederholt stattfinden, insbesondere bis das Licht nach außen gelangt. Der Anteil des von dem teildurchlässigen Spiegel zurückgeworfenen Lichts bestimmt dabei die Light-Recycling-Effizienz und beeinflusst die relative Helligkeit der auf unterschiedlichen Tiefenebenen erscheinenden Leuchtstrukturen.

Je nach Ausführung kann der teildurchlässige Spiegel eine Transparenz zwischen 20 % und 80 %, insbesondere zwischen 40 % und 60 %, speziell zwischen 45 % und 55 % aufweisen. Insbesondere kann die Wahl der Transparenz anhand der designtechnischen Anforderungen an die Leuchtvorrichtung erfolgen. In einigen Ausführungsbeispielen weist der teildurchlässige Spiegel eine Transparenz von ungefähr 50 % auf, was einen hohen Grad, insbesondere für viele Anwendungen ausreichenden Grad, an Light-Recycling bei einer hohen Lichtausbeute ermöglicht.

Der teildurchlässige Spiegel kann in Form einer Spiegelfolie und/oder Spiegelschicht bzw. Spiegelbeschichtung auf einem im Wesentlichen lichtdurchlässigen, insbesondere transluzenten und/oder transparenten, Träger ausgebildet sein. Der Träger kann dabei sowohl zur Halterung der Spiegelfolie als auch optisches Element zur Beeinflussung der Leuchteigenschaften der Leuchtvorrichtung dienen. Der Träger des teildurchlässigen Spiegels kann gleichzeitig als Abschlussplatte bzw. als Lichtaustrittsfenster der Leuchtvorrichtung fungieren.

In einigen Ausführungsbeispielen weist der Träger eine Transmission von mehr als 50 %, insbesondere mehr als 80 %, speziell mehr als 85 %, noch spezieller mehr als 89 %, auf. In einigen Ausführungsbeispielen ist der Träger aus Kunststoff beispielsweise aus Polycarbonat gebildet. Die Transmission des Trägers kann insbesondere anhand der designtechnischen Anforderungen gewählt werden. In einigen Ausführungen weist der Träger eine Strukturierung bzw. Beschriftung auf, welche insbesondere in Kombination mit einer hohen Transmission des Trägers quasi als im Raum schwebend an der Vorderseite der Leuchtvorrichtung erscheinen kann.

Nach einem zweiten Aspekt wird ein Fahrzeug vorgeschlagen. Das Fahrzeug weist wenigstens einen Innenraum mit wenigstens einer Leuchtvorrichtung nach dem ersten Aspekt zur lichttechnischen Gestaltung des Innenraums des Fahrzeugs auf. Aufgrund des gezielten Ausleuchtens des Leuchtkörpers kann die Leuchthelligkeit der Leuchtstruktur erhöht werden, so dass eine für Fahrzeuginsassen deutlich wahrnehmbares Leuchten auch bei einer hohen Umgebungshelligkeit erzielt werden kann.

Die Erfindung wird nun anhand der beigefügten Figuren näher erläutert. Für gleiche oder gleichwirkende Teile werden in den Figuren gleiche Bezugszeichen verwendet.
- Fig. 1: zeigt einen optischen Booster einer Leuchtvorrichtung gemäß einem Ausführungsbeispiel in unterschiedlichen Ansichten,
- Fig. 2: zeigt den optischen Booster gemäß Fig. 1 in weiteren Ansichten,
- Fig. 3: zeigt schematisch eine Leuchtvorrichtung gemäß einem Ausführungsbeispiel,
- Fig. 4: zeigt schematisch die Leuchtvorrichtung gemäß Fig. 3 in einer Explosionsansicht,
- Fig. 5: zeigt schematisch die Leuchtvorrichtung gemäß Fig. 3 in einer Explosionsteilansicht, und
- Fig. 6: zeigt schematisch eine perspektivische Ansicht der Leuchtvorrichtung gemäß Fig. 3 im Betrieb.

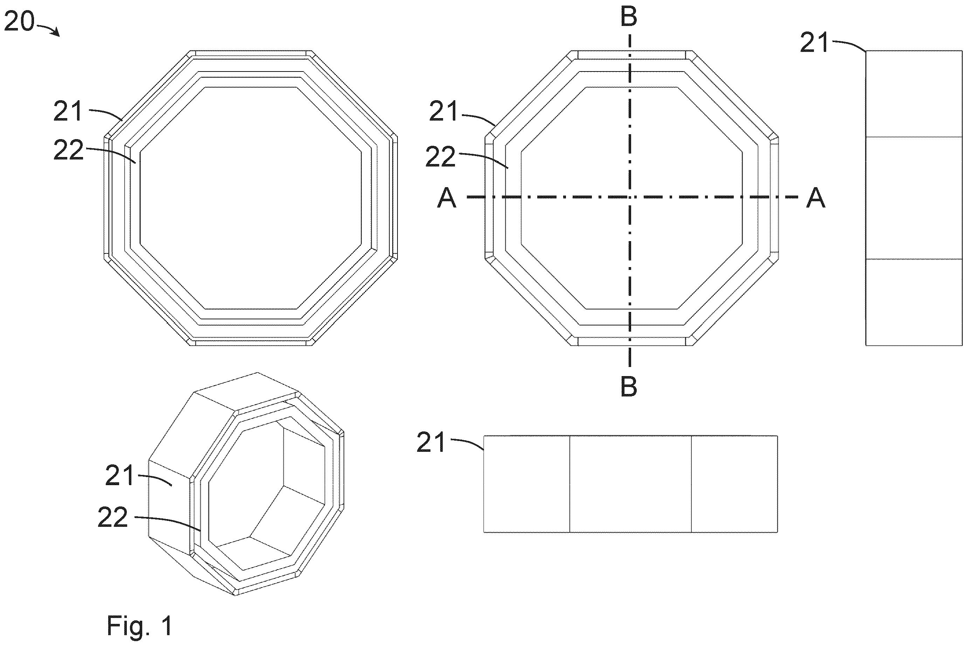

Fig. 1 zeigt einen optischen Booster einer Leuchtvorrichtung gemäß einem Ausführungsbeispiel in unterschiedlichen Ansichten. In dem gezeigten Ausführungsbeispiel umfasst der optische Booster 20 eine radiale Spiegelanordnung mit einem äußeren Spiegel 21 und mit einem inneren Spiegel 22. Die Spiegel 21 und 22 sind im Wesentlichen koaxial zueinander ausgebildet und weisen einen im Wesentlichen oktogonalen Querschnitt auf. Der äußere Spiegel 21 weist eine nach innen gerichtete Spiegeloberfläche auf und der innere Spiegel 22 weist eine nach außen bzw. zu dem äußeren Spiegel 21 hin gerichtete Spiegeloberfläche auf.

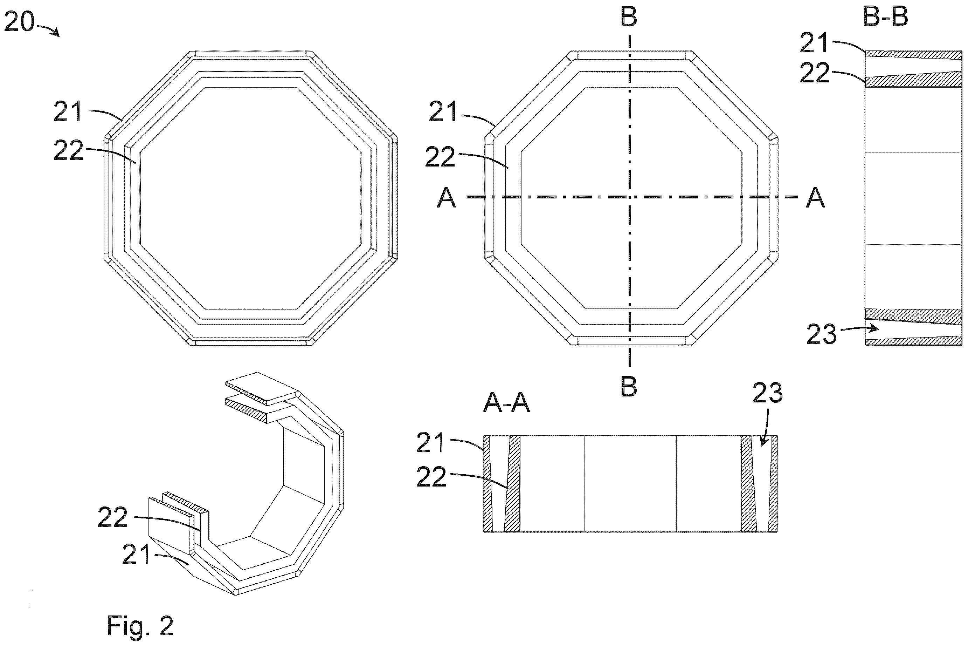

Fig. 2 zeigt den optischen Booster gemäß Fig. 1 in weiteren Ansichten. Insbesondere zeigt Fig. 2 schematische Querschnitte des optischen Boosters 20, und zwar in Seitenansicht (Schnittebene B-B rechts oben im Bild), in perspektivischer Ansicht (links unten im Bild) und in Draufsicht (Schnittebene A-A unten mittig im Bild). Wie anhand der Querschnittsdarstellungen zu sehen ist, sind die Spiegeloberflächen des äußeren Spiegels 21 und des inneren Spiegels 22 derart beabstandet, dass sich ein Lichtkanal 23 bzw. Lichtleitkanal in Form eines Hohlraums zwischen dem äußeren Spiegel 21 und dem inneren Spiegel 22 bildet. In dem gezeigten Ausführungsbeispiel weist der Lichtkanal 23 eine nach vorne spitzzulaufende Form auf und erstreckt sich durch die gesamte Länge des optischen Boosters 20, insbesondere von einer Eingangsseite bis zu einer Ausgangsseite des optischen Boosters 20, hindurch.

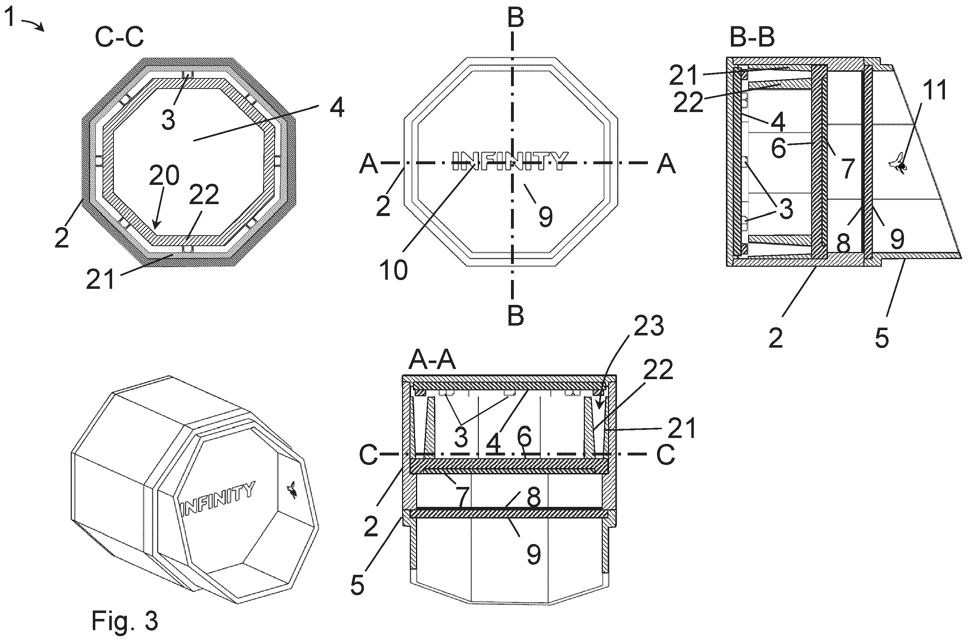

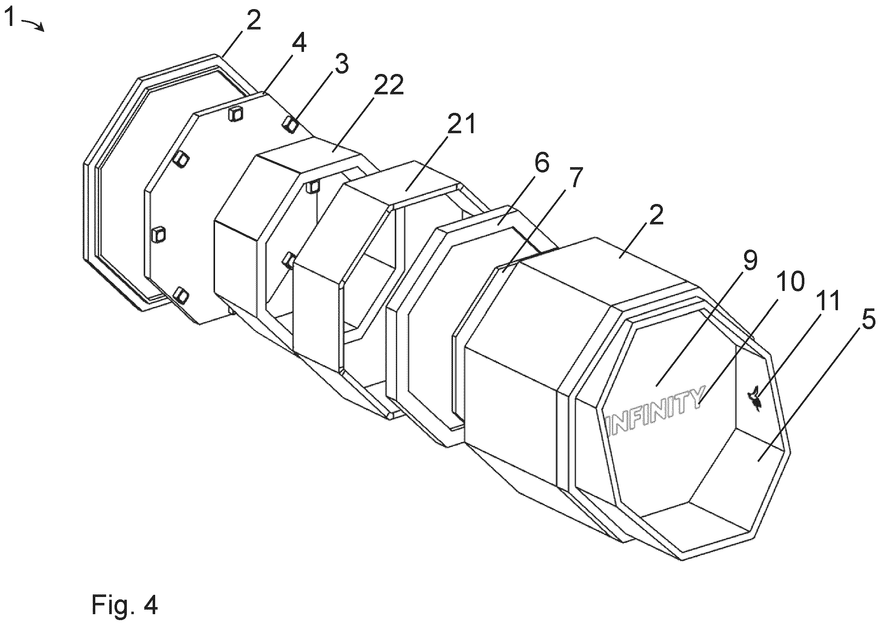

Fig. 3 zeigt schematisch eine Leuchtvorrichtung gemäß einem Ausführungsbeispiel. Insbesondere zeigt Fig. 4 einen schematischen Querschnitt in Frontansicht (Schnittebene C-C links oben im Bild), eine Frontansicht (oben mittig im Bild), einen Querschnitt in Seitenansicht (Schnittebene B-B rechts oben im Bild), eine perspektivische Ansicht und einen Querschnitt in Draufsicht (Schnittebene A-A unten mittig im Bild).

Die Leuchtvorrichtung 1 umfasst ein Gehäuse 2 sowie eine Anzahl von Lichtquellen 3, wobei die Lichtquellen 3 auf einer Trägerplatte 4 bzw. Trägerplatine auf dem Boden des Gehäuses 2 angeordnet sind. Die Lichtquellen 3 sind als LEDs bzw. LED-Lichtquellen ausgebildet und auf der Trägerplatine 4 im Wesentlichen kreisförmig angeordnet. Das Gehäuse 2 ist im Wesentlichen axialsymmetrisch ausgebildet und weist einen oktogonalen Querschnitt sowie einen oktogonal geformten Boden auf. Die Trägerplatte 4 weist ebenfalls ein oktogonales Layout auf und ist passend zu dem Gehäuseboden ausgebildet.

Die Leuchtvorrichtung 1 umfasst ferner einen optischen Booster 20 sowie dem optischen Booster 20 nachgeschalteten Diffusor 6 bzw. Leuchtkörper. Der optische Booster 20 ist ähnlich wie der in Figuren 1 und 2 dargestellter optische Booster aufgebaut. Insbesondere umfasst der optische Booster 20 eine radiale Spiegelanordnung gemäß Figuren 1 und 2. Der optische Booster 20 ist zwischen der Trägerplatte 4 und dem Diffusor 6 bzw. Leuchtkörper so ausgebildet, dass das von den Lichtquellen 3 erzeugte Licht durch den optischen Booster 20 hindurch zu dem Leuchtkörper gelangen kann, wobei bestimmte Bereiche des Leuchtkörpers stärker ausgeleuchtet werden können. In dem gezeigten Ausführungsbeispiel ist der optische Booster 20 so ausgebildet, dass das von den Lichtquellen 3 erzeugte Licht hauptsächlich an Randbereiche des Diffusors 6 gerichtet wird. Auf diese Weise können die Randbereiche des Leuchtkörpers stärker zum Leuchten gebracht werden als andere Bereiche, beispielsweise in der Mitte des Leuchtkörpers. Mit einem geeigneten optischen Booster 20 kann somit in dem Diffusor 6 bzw. in dem Leuchtkörper eine ausgeprägte bzw. visuell deutlich wahrnehmbare Leuchtstruktur erzeugt werden.

In dem gezeigten Ausführungsbeispiel umfasst die Leuchtvorrichtung 1 umfasst ferner eine Frontmaske 5, eine Spiegelanordnung mit einem im Wesentlichen nichttransparenten Spiegel 7 und mit einem teildurchlässigen Spiegel 8 sowie eine Abschlussplatte 9. Die Frontmaske 5 ist in Form eines Tubus mit einem oktogonalen Querschnitt ausgebildet und weist in der Seitenansicht ein sich nach oben verjüngendes Profil auf, was in der perspektivischen Ansicht besonders gut zu sehen ist.

In dem gezeigten Ausführungsbeispiel ist der nichttransparente Spiegel 7 in den Diffusor 6 eingelassen. Insbesondere weist der Diffusor 6 auf einer von den Lichtquellen 3 abgewandten Seite eine Ausnehmung auf, in welche der nichtdurchlässiger Spiegel 7 aufgenommen ist. Auf der den Lichtquellen 3 abgewandten Seite weist der nichtdurchlässige Spiegel 7 eine Spiegeloberfläche bzw. spiegelnde Oberfläche auf. Dem nichtdurchlässigen Spiegel 7 ist der teildurchlässige Spiegel 8 nachgeschaltet. In dem gezeigten Ausführungsbeispiel ist der teildurchlässige Spiegel 8 als Zweiwegespiegelfolie bzw. Spiegelbeschichtung ausgebildet, wobei die Abschlussplatte 9 als Träger der Spiegelfolie fungiert. Auf der Außenseite der Abschlussplatte 9 ist eine strukturierte Folie zur Bildung einer Aufschrift 10 zu sehen. Als Abschlussplatte 9 bzw. Träger wird in diesem Ausführungsbeispiel ein klarer Polycarbonatträger eingesetzt. Auf der Innenseite der Frontmaske ist ein Piktogramm 11 eingraviert bzw. eingeprägt. Die Frontmaske 5 schließt dabei den gesamten Aufbau ab und kann als sichtbares Teil im Fahrzeug spezifisch ausgeführt werden.

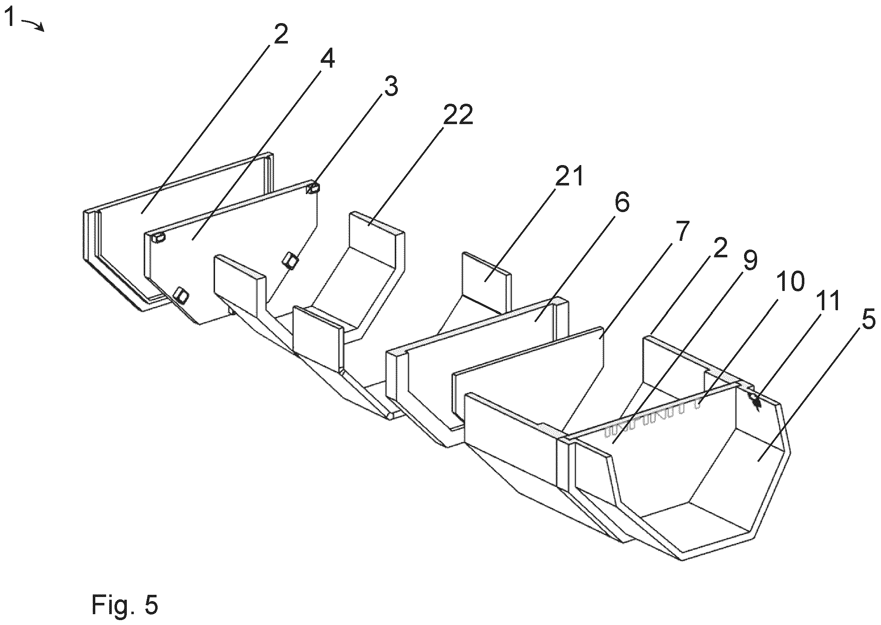

Fig. 4 zeigt schematisch die Leuchtvorrichtung gemäß Fig. 3 in einer Explosionsansicht und Fig. 5 zeigt schematisch die Leuchtvorrichtung gemäß Fig. 3 in einer Explosionsteilansicht. In der Explosionsansicht der Fig. 4 bzw. in der Explosionsteilansicht der Fig. 5 ist die Anordnung von Einzelkomponenten der Leuchtvorrichtung 1, von dem Boden des Gehäuses 2 bis hin zu der Abschlussplatte 9 bzw. der Frontmaske 5 besonders gut zu sehen. Insbesondere wird aus Figuren 4 und 5 der Aufbau des optischen Boosters 20 deutlich, indem der äußere Spiegel 21 und der innere Spiegel 22 voneinander getrennt dargestellt sind.

Aus den Explosionsansichten der Figuren 4 und 5 wird insbesondere deutlich, dass die Leuchtvorrichtung 1 auf einfache Weise zusammengestellt werden kann. Beispielsweise kann in einem ersten Schritt der Boden des Gehäuses 2 bereitgestellt werden, worauf die mit LEDs als Lichtquellen 3 bestückte Trägerplatte 4 angeordnet bzw. montiert werden kann. In einem weiteren Schritt kann die Seitenwand des Gehäuses 2 bereitgestellt und mit dem Diffusor 6 sowie mit dem nichtdurchlässigen Spiegel 7 bestückt werden.

Daraufhin kann der äußere Spiegel 21 ggf. zusammen mit dem inneren Spiegel 22 in das Gehäuse 2 eingesetzt werden. In einigen Ausführungsbeispielen kann der optische Booster 20 zuerst auf die Trägerplatte 4 aufgesetzt und danach in das Gehäuses 2 eingesetzt werden.

Stirnseitig auf die Seitenwand des Gehäuses 2 kann die Abschlussplatte 9 mit dem teildurchlässigen Spiegel 8 aufgelegt werden. In einem abschließenden Schritt kann die Frontmaske 5 auf das Gehäuse 2 aufgesetzt werden. Dabei kann die Frontmaske 5 auch als Fixierelement zur Fixierung der Abschlussplatte 9 bzw. des teildurchlässigen Spiegels 8 fungieren.

In den Figuren 4 und 5 ist der teildurchlässige Spiegel 8 nicht zu sehen. Denn der teildurchlässige Spiegel 8 kann auch ausgelassen werden oder in Form einer dünnen Beschichtung auf der Innenseite der Abschlussplatte 9 ausgebildet sein.

Im Betrieb der Leuchtvorrichtung 1 wird von Lichtquellen 3 Licht zum Anleuchten des Diffusors 6 erzeugt und in den Lichtkanal 23 des optischen Boosters 20 eingespeist. Das in den Lichtkanal 23 eingespeiste Licht wird zu dem Diffusor 6 geleitet, so dass bestimmte Bereiche, insbesondere am Ausgang des Lichtkanals 23 gezielt angeleuchtet werden können. Aufgrund der diffusen Eigenschaften des Diffusors 6 verbreitet sich das eingefallene Licht im Inneren des Diffusors und erzeugt ein diffuses Leuchten des Diffusors 6. Dabei strahlt der Diffusor ein diffuses sekundäres Licht ab, wobei die gezielt angeleuchteten Bereiche des Diffusors besonders hell leuchten. Diese verstärkt leuchtenden Bereiche des Diffusors können dann direkt oder indirekt, je nach Ausführung, von außen visuell besser wahrgenommen werden. Mittels des hier beschriebenen optischen Boosters kann somit die visuelle Wahrnehmbarkeit von leuchtenden Strukturen deutlich verbessert werden.

In dem hier gezeigten Ausführungsbeispiel der Leuchtvorrichtung wird das primäre Licht durch den optischen Booster 20 zu einem Randbereich des Diffusors 6 in Form eines oktogonalen Rahmens geleitet. Dieser Randbereich des Diffusors 6 ist auf der den Lichtquellen 3 abgewandten Seite von dem nichtdurchlässigen Spiegel 7 nicht abgedeckt. Aus diesem Bereich kann somit das Licht aus dem Diffusor 6 austreten und visuell wahrgenommen werden. Das aus dem Diffusor 6 austretende Licht kann in den Raum zwischen dem nichtdurchlässigen Spiegel 7 und dem teildurchlässigen Spiegel 8 gelangen. Dabei kann wenigstens ein Teil des auf den teildurchlässigen Spiegels 8 einfallenden Lichts durch den teildurchlässigen Spiegel 8 und durch die Abschlussplatte 9 hindurch nach außen gelangen. Somit kann der Diffusor 6 von außen als Leuchtstruktur bzw. als leuchtender Rahmen visuell wahrgenommen werden.

Ein Teil des auf den teildurchlässigen Spiegel 8 einfallenden Lichts kann spiegelreflektiert zurückgeworfen und von dem nichtdurchlässigen Spiegel 7 erneut auf den teil reflektierten Spiegel 8 gelenkt werden. Ein Teil dieses Lichts kann wiederum durch den teildurchlässigen Spiegel 8 und durch die Abschlussplatte 9 nach außen gelangen. Auf diese Weise können Abbildungen insbesondere zweiter, dritter und weiterer Ordnungen entstehen, welche von außen visuell wahrnehmbar sind. Durch multiple Reflektionen zwischen den Spiegeln entsteht somit eine Vielzahl von Wiederholungen der Lichtgrafik bzw. Leuchtstruktur mit abnehmender Leuchtdichte innerhalb des inneren Gehäusekanals. Dabei können diese Abbildungen, insbesondere gemäß den Gesetzten der geometrischen Optik, räumlich versetzt zueinander erscheinen, was zu einem Infinity- bzw. Volumen-Effekt führen kann.

In einigen Ausführungsbeispielen sind die Innenwände des Gehäuses 2 wenigstens bereichsweise, insbesondere in dem zwischen dem nichtdurchlässigen Spiegel 7 und dem teildurchlässigen Spiegel schwarz bzw. lichtabsorbierend ausgebildet. Dadurch kann das Streulicht bzw. Hintergrundlicht unterdrückt bzw. reduziert werden, um insbesondere die Abbildungen des Diffusors 6 optisch stärker hervorzuheben.

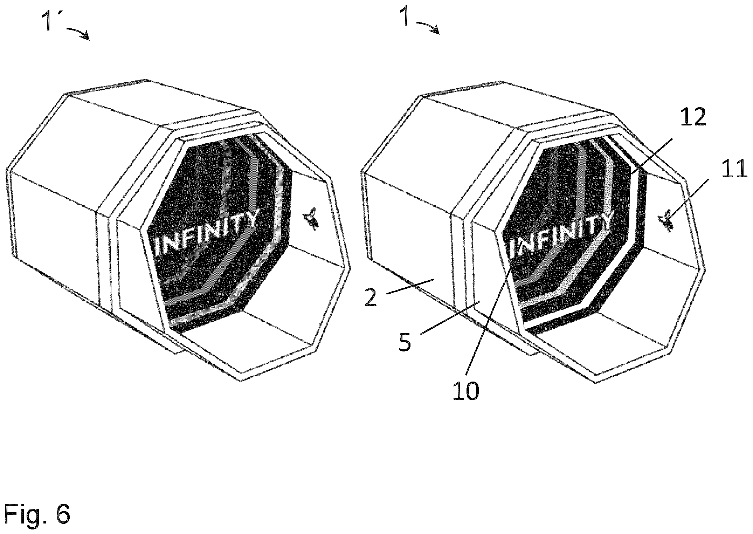

Fig. 6 zeigt schematisch eine perspektivische Ansicht der Leuchtvorrichtung gemäß Fig. 3 im Betrieb. Insbesondere zeigt Fig. 6 die Leuchtvorrichtung 1 gemäß Fig. 3 mit dem optischen Booster (rechts im Bild) und eine im Wesentlichen ähnliche Leuchtvorrichtung 1' ohne den optischen Booster (links im Bild). Insbesondere stellt Fig. 6 Simulationsergebnisse dar und veranschaulicht den Boost-Effekt sowie den Infinity- bzw. Volumen-Effekt, der mittels der Leuchtvorrichtung 1 erzielt werden kann. In der gezeigten Ansicht sind Abbildungen 12 des Diffusors 6 in Form von koaxial hintereinander angeordneten oktogonalen Ringen sichtbar.

Wird die Leuchtvorrichtung 1 als Innenraum-Leuchtvorrichtung eines Fahrzeugs eingesetzt, so kann die Leuchtvorrichtung 1 von Fahrzeuginsassen aus unterschiedlichen Perspektiven betrachtet werden. Bei Änderung von Augenpositionen der Fahrzeuginsassen ändert sich zwar die Position von Abbildungen, bleibt jedoch aufgrund von Gesetzen der geometrischen Optik die koaxiale Anordnung der Abbildungen erhalten. Bei den Betrachtern entsteht dabei die Illusion, dass die Leuchtvorrichtung 1 eine unendliche Tiefe aufweist, und dass im Inneren der Leuchtvorrichtung 1 unendlich viele leuchtende Ringe hintereinander angeordnet sind.

Der Vergleich der Abbildungen 12 bei den beiden Leuchtvorrichtungen 1 und 1' zeigt einen deutlichen Boost-Effekt bzw. eine deutliche Helligkeitssteigerung bei den Abbildungen 12 der Leuchtstruktur im Falle der Leuchtvorrichtung 1 mit dem optischen Booster. Gemäß den durchgeführten optischen Simulationen kann mittels des optischen Boosters bei den Abbildungen 12 eine Helligkeitssteigerung von bis zu 50 % und höher erzielt werden.

Es ist anzumerken, dass die hier beschriebenen Leuchtvorrichtungen eine große Gestaltungsfreiheit für Innenraumdesigner bieten. So können sämtliche Komponenten in verschiedenen Varianten ausgeführt sein. Auch das Gehäuse 2 kann eine andere ggf. polygonale oder runde Form aufweisen. Zudem können optische Eigenschaften des Diffusors 6, des teildurchlässigen Spiegels 8 und der Abschlussplatte variiert werden. Beispielsweise kann die Transparenz des teildurchlässigen Spiegels 8 vermindert werden, um insbesondere relative Helligkeit von Abbildungen 12 höheren Grades zu erhöhen. So kann beispielsweise bei einer Transparenz von 50 % eine sanfte Helligkeitsabstufung zwischen den Abbildungen unterschiedlichen Grades bei einer verhältnismäßig hohen Gesamtlichtausbeute erzielt werden Auch die Transmission und/oder die Diffusivität der Abdeckplatte 9 kann als Parameter bei der Auslegung der Leuchtvorrichtung verwendet werden. Die Aufschrift 10 auf der Abschlussplatte 9 sowie das Piktogramm 11 bzw. das Logo auf der Innenwand der Frontmaske 5 sollen insbesondere die designtechnische Gestaltungsmöglichkeiten der Leuchtvorrichtung 1 hervorheben. Die Abschlussplatte 9 mit einer hohen Transmission bzw. eine klare Scheibe als Abschlussplatte 9 insbesondere bei einer hohen Transparenz des teildurchlässigen Spiegels 8 könnte beispielsweise dazu verwendet werden, die Aufschrift 10 quasi als im Raum schwebend erscheinen zu lassen.

Je nach Ausführung kann der optische Booster 20 bzw. die Spiegel 21 und 22 und der Lichtkanal 23 unterschiedlich ausgebildet sein. Insbesondere kann der optische Booster den designtechnischen Anforderungen gezielt angepasst sein. So können die Spiegeloberflächen der Spiegel 21 und 22 bzw. die Wände des Lichtkanals 23 unterschiedliche Neigungswinkel aufweisen. Die Spiegeloberflächen der Spiegel 21 und 22 können beispielsweise im Wesentlichen parallel zueinander ausgebildet sein. In einigen Ausführungsbeispielen sind die Spiegel 21 und 22 so ausgebildet, dass sich der Lichtkanal 23 ausgangsseitig erweitert. Dadurch kann insbesondere die Strukturbreite der Leuchtstruktur vergrößert und die Gesamtlichtausbeute der Leuchtvorrichtung erhöht werden. Es ist auch denkbar, dass der Booster Montageelemente, insbesondere Montagestifte und/oder -haken aufweist, mit welchen der optische Booster auf der Trägerplatte ggf. an entsprechenden Gegenmontageelementen montiert werden kann. Der optische Booster kann insbesondere in einem Spritzgussverfahren hergestellt und in einem Beschichtungsschritt mit Spiegeloberflächen versehen werden.

Die hier beschriebenen Leuchtvorrichtungen zeichnen sich durch besonders kompakte und kostengünstige Bauweise aus und bieten neben den deutlich sichtbaren Leuchtstrukturen mit ausgeprägten Volumen- bzw. Unendlichkeitseffekten große designtechnische Gestaltungsfreiheit. Aufgrund der axialen Anordnung der Lichtquellen und des Boost-Effekts kann zudem eine signifikante Steigerung der Leuchtdichte der Leuchtstruktur bzw. Lichtgrafik erzielt werden. Dies ermöglicht im Vergleich zum Stand der Technik eine Steigerung der Wahrnehmbarkeit in hellen Umgebungen bei gleicher LED-Anzahl oder bzw. Reduktion der LED-Anzahl bei konstanter Leuchtdichte. Darüber hinaus kann eine homogenere Leuchtdichteverteilung innerhalb jeder Wiederholung des Lichtmusters in axialer Richtung erzielt werden. Die Darstellung des Lichtmusters wirkt dadurch präziser und verbessert die wahrgenommene Qualitätsanmutung insbesondere verglichen zum Stand der Technik. Zudem wird die Komplexität der Baugruppe reduziert unter anderem durch die Positionierung der LEDs auf einer gemeinsamen Ebene. Dies ermöglicht eine Ausführung der Trägerplatte bzw. Platine als Vollkörper, so dass eine Ausführung der Platine mit variierender Flächennormale vermieden werden kann.

Obwohl zumindest eine beispielhafte Ausführungsform in der vorhergehenden Beschreibung gezeigt wurde, können verschiedene Änderungen und Modifikationen vorgenommen werden. Die genannten Ausführungsformen sind lediglich Beispiele und nicht dazu vorgesehen, den Gültigkeitsbereich, die Anwendbarkeit oder die Konfiguration der vorliegenden Offenbarung in irgendeiner Weise zu beschränken. Vielmehr stellt die vorhergehende Beschreibung dem Fachmann einen Plan zur Umsetzung zumindest einer beispielhaften Ausführungsform zur Verfügung, wobei zahlreiche Änderungen in der Funktion und der Anordnung von in einer beispielhaften Ausführungsform beschriebenen Elementen gemacht werden können, ohne den Schutzbereich der angefügten Ansprüche und ihrer rechtlichen Äquivalente zu verlassen. Außerdem können nach den hier beschriebenen Prinzipien auch mehrere Module bzw. mehrere Produkte miteinander verbunden werden, um weitere Funktionen zu erhalten.

### Bezugszeichenliste

- 1: Leuchtvorrichtung
- 1': Leuchtvorrichtung
- 2: Gehäuse
- 3: Lichtquelle
- 4: Trägerplatte
- 5: Frontmaske
- 6: Diffusor
- 7: Spiegel
- 8: Spiegel
- 9: Abschlussplatte
- 10: Aufschrift
- 11: Piktogramm
- 12: Abbildung

- 20: optischer Booster
- 21: äußerer Spiegel
- 22: innerer Spiegel
- 23: Lichtkanal

## Patentansprüche

1. Leuchtvorrichtung (1) für einen Innenraum eines Fahrzeugs, umfassend:
- ein Gehäuse (2),
- einen Leuchtkörper (6) zum Erzeugen einer Leuchtstruktur innerhalb des Gehäuses (2), und
- wenigstens eine Lichtquelle (3) zum Ausleuchten des Leuchtkörpers (6), und
- einen der wenigstens einen Lichtquelle (3) nachgeschalteten optischen Booster (20), wobei der optische Booster (20) dazu ausgebildet ist, das von der wenigstens einen Lichtquelle (3) erzeugte Licht gezielt zu dem Leuchtkörper (6) zu bringen.

2. Leuchtvorrichtung nach Anspruch 1, wobei der optische Booster (20) wenigstens einen Lichtkanal (23) zum Leiten des von der wenigstens einen Lichtquelle (3) erzeugten Lichts zu dem Leuchtkörper (6) umfasst.

3. Leuchtvorrichtung nach Anspruch 1 oder 2, wobei der optische Booster (20) eine erste Spiegelanordnung (21,22) mit im Wesentlichen zueinander gerichteten Spiegeloberflächen umfasst.

4. Leuchtvorrichtung nach einem der vorhergehenden Ansprüche, wobei die Leuchtvorrichtung (1) eine zweite Spiegelanordnung (7,8) umfasst, und wobei die zweite Spiegelanordnung (7,8) derart ausgebildet ist, dass die Leuchtstruktur an unterschiedlichen Tiefenebenen innerhalb des Gehäuses (2) mehrfach erscheinen kann.

5. Leuchtvorrichtung nach einem der vorhergehenden Ansprüche, wobei das Gehäuse (2) eine im Wesentlichen axialsymmetrisch ausgebildete Seitenwand und einen flächigen Gehäuseboden umfasst, und wobei die wenigstens eine Lichtquelle im Wesentlichen planar auf einer Innenseite des flächigen Gehäusebodens angeordnet ist.

6. Leuchtvorrichtung nach Anspruch 5, wobei der Leuchtkörper (6) und die zweite Spiegelanordnung (7,8) der wenigstens einen Lichtquelle (3) und dem optischen Booster in axialer Richtung nachgeschaltet und im Wesentlichen planparallel zu dem Gehäuseboden ausgebildet sind.

7. Leuchtvorrichtung nach einem der vorhergehenden Ansprüche, wobei die zweite Spiegelanordnung (7,8) einen im Wesentlichen nichttransparenten Spiegel (7) mit einer der wenigstens einen Lichtquelle (3) abgewandten Spiegeloberfläche umfasst.

8. Leuchtvorrichtung nach Anspruch 4, wobei der nichttransparente Spiegel (7) mit einer der wenigstens einen Lichtquelle (3) zugewandten Seite an dem Leuchtkörper (6) anliegt.

9. Leuchtvorrichtung nach einem der vorhergehenden Ansprüche, wobei die Spiegelanordnung (7,8) wenigstens einen dem im Wesentlichen nichtdurchlässigen Spiegel (7) nachgeschalteten teildurchlässigen Spiegel (8) umfasst.

10. Fahrzeug, wobei das Fahrzeug wenigstens einen Innenraum mit wenigstens einer Leuchtvorrichtung (1) nach einem der vorhergehenden Ansprüche zur lichttechnischen Gestaltung des Innenraums des Fahrzeugs aufweist.
